(19) Europäisches Patentamt
European Patent Office
Office européen des brevets

(11) EP 1 496 659 A1

(12) EUROPEAN PATENT APPLICATION

(43) Date of publication:
**12.01.2005 Bulletin 2005/02**

(51) Int Cl.[7]: **H04L 27/26**

(21) Application number: **04014868.6**

(22) Date of filing: **24.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **08.07.2003 KR 2003046201**

(71) Applicants:
- **Samsung Electronics Co., Ltd.**
  **Suwon-si, Gyeonggi-do 442-742 (KR)**
- **Postech Foundation**
  **Pohang-si, Gyeoungsangbuk-do (KR)**

(72) Inventors:
- **Lee, Jong-Hyeuk**
  **Yeongtong-gu, Suwon-si, Gyeonggi-do (KR)**
- **Kim, Yung-soo**
  **Yeongtong-gu, Suwon-si, Gyeonggi-do (KR)**
- **Im, Gi-Hong**
  **Pohang-si, Gyeongsangbuk-do (KR)**
- **Won, Hui-Chul**
  **Yeongdo-gu, Busan (KR)**
- **Park, Cheol-Jin**
  **Nam-gu, Pohang-si, Gyeongsangbuk-do (KR)**

(74) Representative: **Grünecker, Kinkeldey,**
**Stockmair & Schwanhäusser Anwaltssozietät**
**Maximilianstrasse 58**
**80538 München (DE)**

(54) **Transmitting and receiving apparatus and method in an orthogonal frequency division multiplexing system using an insufficient cyclic prefix**

(57) A preprocessing apparatus and method for a transmitter and a receiver to prevent system performance degradation caused by Inter-Channel Interference (ICI) or inter-symbol interference (ISI) in an OFDM system. In the OFDM system using N carriers having different frequency bands and K carriers of the N carriers designated as redundant carriers, the transmitter renders ICI-causing parts to be zeroes in a data frame, when a cyclic prefix is not longer than a channel impulse response. Therefore, the ICI is prevented. The receiver eliminates the ISI involved in a current frame using an interference estimated from a previous data frame. Therefore, noise spread caused by the use of redundant carriers is prevented and system complexity is remarkably reduced.

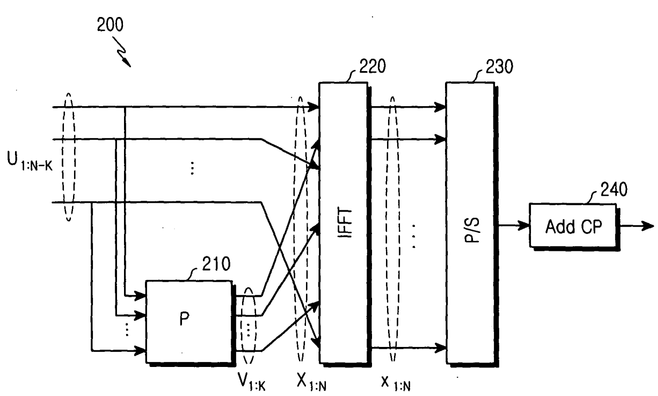


FIG.3



Printed by Jouve, 75001 PARIS (FR)

## Description

The present invention relates generally to an OFDM (Orthogonal Frequency Division Multiplexing) system, and in particular, to a preprocessing apparatus and method in a transmitter/receiver, which prevents system performance from being degraded due to ICI (Inter-Channel Interference) or ISI (Inter-Symbol Interference).

OFDM is a multi-carrier modulation scheme that splits data over a number of carriers and transmits the split data in parallel at a low rate so that frequency-selective fading or narrowband interference is mitigated, as opposed to conventional single carrier schemes that transmit data at high rate. In OFDM, spectra of sub-carriers overlap with orthogonality, which increases spectral efficiency. A transmission signal is modulated by IFFT (Inverse Fast Fourier Transform) and a received signal is demodulated by FFT (Fast Fourier Transform). Thus, a digital modulator and demodulator can be implemented efficiently. A major benefit from this configuration is that a receiver is easily implemented using an equalizer that requires no more than one complex multiplication per carrier.

In OFDM, interference caused by multi-path fading is mitigated by increasing a symbol period in proportion to a number of sub-channels. In this mitigation method, a guard interval is inserted every predetermined number of symbols. The last symbols of a frame comprising as many symbols as carriers are duplicated in the guard interval. These symbols are termed a cyclic prefix (CP). The CP must be longer than a channel impulse response (CIR) representing the channel characteristics of a radio channel.

If the CIR is longer than the CP, then ICI and ISI degrade system performance. The length of the CP is given preliminarily in an actual system. In view of the random property of an air interface, the CIR may have a longer period than the CP during transmission. The transmission over a radio channel is characterized by frequency selectivity.

In general, if a channel gain is 0 (null) or a frequency band having a bad SNR (Signal to Noise Ratio) exists because of significant interference, the frequency band is excluded from data transmission. Techniques like AMC (Adaptive Modulation and Coding), which are useful in a nomadic or indoor office environment, leave the frequency band as redundancy. In this context, a scheme of suppressing ICI and ISI caused by an insufficient CP length using the redundant frequency band has been proposed. This technique is termed FEQ-DMT (Frequency-domain Equalizer-Discrete Multi-tone Modulation).

For explanation purposes, herein below, the carriers delivering user data will be called data carriers and all other carriers will be called redundant carriers in an OFDM system.

An FEQ-DMT transmitter transmits a null signal over redundant carriers. In other words, it transmits no signals over the redundant carriers. An FEQ-DMT receiver then extracts interference signals from signals over the redundant carriers and subtracts the extracted interference signals from signals over data carriers, thereby eliminating the effects of the interference.

FIG. 1 is a block diagram of a conventional FEQ-DMT receiver using a redundant frequency band. It is assumed that the total number of carriers is N, including M data carriers and K redundant carriers. Therefore, N=M+K.

Referring to FIG. 1, an FEQ-DMT receiver 100 comprises a serial to parallel (S/P) converter 110, a CP remover 120, an FFT 130, a redundant carrier sorter 140, a Q filter 150, adders 160-1 to 160-M, and a 1-tap FEQ (Frequency Equalizer) 170. The S/P converter 110 collects a predetermined number of received serial symbols and outputs them in parallel. The CP remover 120 removes CPs from the symbols. The FFT 130 demodulates the output of the CP remover 120 by FFT and outputs N frequency components, Y[0], Y[1], ..., Y[N-2], Y[N-1] corresponding to N frequencies. The redundant carrier sorter 140 separates data carrier components Y[$p_1$], ..., Y[$p_K$] and redundant carrier components Y[$u_1$], ..., Y[$u_M$] from the N components.

The Q filter 150 extracts interference components I[$u_1$], ..., I[$u_M$], which are caused by the data carriers using the redundant carrier components, by a known interference extraction technique. The interference components cover ICI and ISI. The adders 160-1 to 160-M eliminate the influence of the interference by subtracting the interference components I[$u_1$], ..., I[$u_M$] from the data carrier components Y[$p_1$], ..., Y[$p_K$]. The 1-tap FEQ 170 equalizes the outputs of the adders 160-1 to 160-M. Although not illustrated in FIG. 1, a decider is further included in the FEQ-DMT receiver 100, for detecting the original data symbols from the equalized data.

One of the shortcomings of the FEQ-DMT receiver as illustrated in FIG. 1 is the complexity of the Q filter. Another shortcoming is that noise in the signals over the redundant carriers is added to signals over the data carriers in the Q filter, resulting in noise enhancement. Because the redundant carriers usually have a bad SNR, noise over the redundant carriers spreads to the data carriers, thereby yielding even worse system performance.

It is an aspect of the present invention to substantially solve at least the above problems and/or disadvantages and to provide at least the advantages described below.

It is the object of the present invention to provide a transmitting/receiving apparatus and method for eliminating an influence of interference, while reducing system complexity in an OFDM system using an insufficient CP.

This object is solved by the subject matter of the independent claims.

Preferred embodiments are defined in the dependent claims.

Another aspect of the present invention is to provide a transmitting/receiving apparatus and method for preventing ICI caused by an insufficient CP using a redundant frequency band in an OFDM system.

A further aspect of the present invention is to provide a transmitting/receiving apparatus and method for preventing ISI caused by an insufficient CP using a redundant frequency band in an OFDM system.

The above object and aspects are achieved by providing a preprocessing apparatus and method for a transmitter and a receiver to prevent system performance degradation caused by ICI or ISI in an OFDM system.

According to one aspect of the present invention, in a transmitting apparatus of an OFDM system in which N carriers having different frequency bands are used and K ones of the N carriers are set as redundant carriers, a P filter receives (N-K) data symbols and generates K virtual data symbols. An IFFT, having N input taps corresponding to the N carriers, receives the (N-K) data symbols at (N-K) taps corresponding to data carriers other than the redundant carriers, receives the K virtual data symbols at K taps corresponding to the redundant carriers, inverse-fast-Fourier-transforms the data symbols and the virtual data symbols, and outputs an IFFT data frame. Here, the virtual data symbols are set such that values causing ICI in the data frame become zeroes.

According to another aspect of the present invention, in a receiving apparatus in an OFDM system using N carriers having different frequency bands, a CP remover receives a data frame and removes a CP of a predetermined length from before the data frame, and an FFT fast-Fourier-transforms the output of the CP remover and outputs N frequency components corresponding to the N carriers. A plurality of adders are used to subtract an interference estimated from a previous data frame from the frequency components. A 1-tap FEQ equalizes the outputs of the adders. A decider detects original data symbols from the equalized data. An interference estimator estimates interference from the detected data symbols and provides the interference estimate to the adders for a next data frame period.

The above features and advantages of the present invention will become more apparent from the following detailed description when taken in conjunction with the accompanying drawings in which:

FIG. 1 is a block diagram of a conventional FEQ-DMT receiver using a redundant frequency band;

FIGs. 2A and 2B illustrate the structures of OFDM data frames, referred to for describing the present invention;

FIG. 3 is a block diagram of a transmitter in an OFDM system according to an embodiment of the present invention;

FIG. 4 illustrates extraction of L-1:L-$L_{cp}$ data symbols by use of a matrix A;

FIG. 5 illustrates sorting redundant carriers among a plurality of carriers;

FIG. 6 is a block diagram illustrates a receiver when a CP is not used according to an embodiment of the present invention;

FIG. 7 is a block diagram illustrates a receiver when a CP is used according to another embodiment of the present invention;

FIG. 8 is a graph illustrating a static channel environment having a fractional power distribution; and

FIG. 9 is a graph illustrating results of a simulation comparing performance according to the present invention with FEQ-DMT performance.

Preferred embodiments of the present invention will be described herein below with reference to the accompanying drawings. In the following description, well-known functions or constructions are not described in detail since they would obscure the invention in unnecessary detail.

As indicated above, the present invention, among other things, is intended to prevent system performance degradation caused by ICI and ISI involved in a number of carriers.

FIG. 2A illustrates a structure of an OFDM data frame with a longer CP than a CIR. As illustrated in FIG. 2A, an nth frame is $X^n_{1:N}$ and the length of a CP is $L_{cp}$. Here, N is both the length of a transmission frame and the number of entire carriers. A copy of the last $L_{cp}$ of the N samples is attached as cyclic CP before the nth frame. The length of a CIR is L. If $L_{cp}$ is equal to or greater than L, because a longer CP than a CIR is interposed between frames, the CP prevents ICI and ISI.

FIG. 2B illustrates the structure of an OFDM frame with a CIR that is longer than a CP. Here, L is greater than $L_{cp}$. (L-$L_{cp}$) more CP samples are needed to cope with the CIR. In an nth frame, there is sample data of the previous frame, $X^{n-1}_{N-Lcp+1:N}$ in place of expected CP sample data, that is, sample data of the current frame, $X^n_{N-L+1:N-L+Lcp}$. The expected but not transmitted CP samples $X^n_{N-L+1:N-L+Lcp}$ and the unexpected samples of the previous frame $X^{n-1}_{N-Lcp+1:N}$ cause ICI and ISI, respectively.

The ICI and ISI can be prevented by transmitting 0s at those sample positions. Specifically, a transmitter transmits 0s at particular data positions over redundant carriers of a frequency band. The number of necessary redundant carriers is proportional to the number of necessary zero symbols.

As illustrated in FIG. 2B, however, because symbols causing the ICI and ISI, respectively, are arranged at different positions, the number of redundant carriers required to prevent both the ICI and ISI is two times greater than that of the redundant carriers required to prevent either of them. An increase in the number of redundant carriers causes a decrease in frequency efficiency. Based on the idea that a receiver easily eliminates the ISI if channel characteristics can be estimated, the transmitter prevents the ICI and the receiver eliminates the ISI in accordance with the present invention. Accordingly, system configuration is simplified and the effects of the ICI and ISI are minimized without decreasing frequency efficiency.

FIG. 3 is a block diagram of a transmitter in an OFDM system according to an embodiment of the present invention. As above, it is assumed herein below that the number of entire carriers is N, including M data carriers and K redundant carriers. Therefore, N=M+K.

Referring to FIG. 3, a transmitter 200 includes a P filter 210, an IFFT (Inverse Fast Fourier Transformer) 220, a parallel to serial (P/S) converter 230, and a CP adder 240. Other known components of the transmitter 200, for example, a modulator, a spreader, and an RF (Radio Frequency) module are not shown.

The P filter 210 generates virtual data symbols $V_{1:K}$ to be transmitted over redundant carriers using (N-K) input user data symbols $U_{1:N-K}$. The virtual data symbols $V_{1:K}$ have values that render positions causing the ICI on a time axis to be zeroes. In the case illustrated in FIG. 2B, the ICI-causing positions are $N-L+1:N-L+L_{cp}$. The operation of the P filter 210 will be described later in more detail.

The (N-K) data symbols, $U_{1:N-K}$ are applied to input taps corresponding to used carriers among the input taps of the IFFT 210, and the K virtual data symbols $V_{1:K}$ are applied to the other input taps of the OFFT 220 corresponding to unused carriers, that is, redundant carriers. The IFFT 220 modulates the input data symbols by IFFT. The P/S converter 230 serializes the output of the IFFT 220, and the CP adder 240 adds a CP of length $L_{cp}$ before the serial data, prior to transmission on a radio channel.

As described above, N is the total number of carriers, K is the number of redundant carriers, L is the length of a CIR, and $L_{cp}$ is the length of a CP. More accurately, L is an estimated maximum length of the CIR. A receiver measures CIR characteristics and feeds back the measurement to a transmitter. The transmitter then estimates the maximum length of a CIR sample based on the measurement.

If $U^{n}_{1:N-K}$ represents user data symbols and $V^{n}_{1:K}$ represents virtual data symbols,

$$V^{n}_{1:K} = PU^{n}_{1:N-K} \qquad (1)$$

where P denotes the filtering tap coefficients of the P filter 210, which can be expressed as a Kx(N-K) matrix. The data symbols and the virtual data symbols are applied to the input of the IFFT 220. The input of the IFFT 220 can be represented as $X_{1:N}$, where,

$$X^{n}_{1:N} = S_1U^{n}_{1:N-K} + S_0V^{n}_{1:K} \qquad (2)$$

and $S_0$ is an NxK matrix that assigns $V_{1:K}$ to redundant carriers, and $S_1$ is an Nx(N-K) matrix that assigns $U_{1:N-K}$ to data carriers. The output of the IFFT 220 is expressed as

$$X^{n}_{1:N} = W^{*}_{N}X^{n}_{1:N} \qquad (3)$$

where the FFT output $x^{n}_{1:N}$ is the time-domain value of $X^{n}_{1:N}$ , $W_N$ is an N-point FFT function, and $(\cdot)^*$ is the conjugate.

As illustrated in FIG. 2B, samples associated with the ICI in the data frame are $x^{n}_{N-L+1:N-Lcp}$, which are extracted from $x^{n}_{1:N}$ by

$$X^{n}_{N-L+1:N-L_{cp}} = Ax^{n}_{1:N} \qquad (4)$$

where A is an $(L-L_{cp})$xN matrix for extracting $L-L_{cp}$:L-1 data symbols. A is defined as

$$A = [0_{(L-L_{cp})\times(N-L)} I_{(L-L_{cp})} 0_{(L-L_{cp})\times L_{cp}}] \qquad (5)$$

where 0 is a zero matrix and I is an identity matrix. Therefore, A is a combination of a $(L-L_{cp})$x(N-L) zero matrix, an $(L-L_{cp})$x$(L-L_{cp})$ identity matrix, and a $(L-L_{cp})$x$L_{cp}$ zero matrix.

FIG. 4 illustrates extraction of $L-L_{cp}$:L-1 data symbols by the matrix A. As illustrated in FIG. 4, $x_{N-L+1:N-L+L_{cp}}$ is extracted by multiplying the matrix A by an (Nx1) data symbol matrix, x.

FIG. 5 illustrates an example of carriers classified by $S_0$ and $S_1$ when N=4 and first and third carriers are designated as redundant. As illustrated in FIG. 5, $S_0$ is a 4x2 matrix having the first and third rows of a 4x4 I matrix,

and $S_1$ is a 4x2 matrix having the other rows of the I matrix. Virtual data symbols $V_1$ and $V_2$ are assigned to first and third positions, while data symbols $U_1$ and $U_2$ are assigned to second and fourth positions, according to these matrices.

The filtering coefficient P of the P filter 210 must be set such that $x_{N-L+1:N-L_{cp}}$ is 0. By substituting Eq. (1) and Eq. (3) for Eq. (4), then,

$$x^n_{N-L+1:N-L_{cp}} = AW^*_N(S_1U^n_{1:N-K} + S_0PU^n_{1:N-K}) = 0_{(L-L_{cp})\times 1} \quad (6)$$

which can be reduced to

$$P = -(AW^*_NS_0)^{-1}AW^*_NS_1 \quad (7)$$

As described above, the transmitter transmits the virtual data symbols over the redundant carriers by use of the P filter 210, thereby preventing the ICI even when the CP is shorter than the CIR. A special case of the CP being shorter than the CIR may occur in which the CP is not used. Referring to FIG. 2, in this case, the data symbols $x^n_{N-L++1:N}$ of the current frame cause the ICI, and the data symbols $X^{n-1}_{N-L++1:N}$ of the previous frame cause the ISI. That is, the ICI and ISI arise from the same position in one frame.

When the CP is not used, prevention of the ICI leads to prevention of the ISI. Thus, the transmitter prevents both the ICI and ISI by inserting virtual data symbols. In summary, in the presence of the CP, the ISI occurs in a received signal, while in the absence of the CP, no ISI is generated in the received signal in the transmitter of the present invention. Therefore, when the CP is not used, that is, the CP adder 245 is omitted in the transmitter illustrated in FIG. 3, a receiver being the counterpart of the transmitter does not need an additional component for eliminating the interference.

FIG. 6 is a block diagram illustrating a receiver when a CP is not used according to an embodiment of the present invention. The receiver is configured so as to eliminate ISI in a received signal. As illustrated in FIG. 6, the receiver is applicable to both cases where virtual data symbols are transmitted at redundant frequencies, and where zero symbols are transmitted over redundant carriers.

Referring to FIG. 6, a receiver 300 comprises an S/P converter 310, an FFT 320, a redundant carrier sorter 330, a 1-tap FEQ 340, and a decider 350. The S/P converter 310 collects received symbols in one frame and outputs them in parallel. The FFT 320 demodulates the parallel symbols by FFT and outputs N frequency components, Y[0], Y[1], ..., Y[N-2], Y[N-1] corresponding to N frequencies. The redundant carrier sorter 330 separates the N frequency components into data carrier components $Y[p_1]$, ..., $Y[p_K]$ and redundant carrier components $Y[u_1]$, ..., $Y[u_M]$ from the N components.

The redundant carrier components are neglected because they are used to prevent interference that affects the data carriers. The 1-tap FEQ 340 equalizes the data carrier components, which are interference-free due to the redundant carrier components. The decider 350 detects the original data symbols from the equalized data.

When a CP is used, that is, when the length of the CP is not 0 and less than the length of a CIR, ISI is generated during transmission. Therefore, the receiver needs an additional component for removing the ISI.

FIG. 7 is a block diagram illustrating a receiver when a CP is used according to another embodiment of the present invention. The receiver is configured so as to eliminate ISI in a received signal. Further the receiver is applicable to both cases where virtual data symbols are transmitted at redundant frequencies, and where zero symbols are transmitted over redundant carriers.

Referring to FIG. 7, a receiver 400 comprises an S/P converter 410, a CP remover 420, an FFT 430, a redundant carrier sorter 440, adders 450-1 to 450-M, a 1-tap FEQ 460, a decider 470, a delay (D) 480, and an $H_{ISI}$ filter 490. As compared to the receiver 300 illustrated in FIG. 6, the receiver 400 further includes the CP remover 420, the adders 450-1 to 450-M, the delay 480, and the $H_{ISI}$ filter 490.

The S/P converter 410 collects received serial symbols in one frame and outputs them in parallel. The CP remover 420 removes CPs from the symbols. The FFT 430 demodulates the output of the CP remover 420 by FFT and outputs N frequency components, Y[0], Y[1], ..., Y[N-2], Y[N-1] corresponding to N frequencies. The redundant carrier sorter 440 separates the N frequency components into data carrier components $Y[p_1]$, ..., $Y[p_K]$ and redundant carrier components $Y[u_1]$, ..., $Y[u_M]$. The redundant carrier components are neglected because they are used to prevent ICI.

The adders 450-1 to 450-M subtract interference estimated from data symbols of a previous frame from the data carrier components involving ISI, thereby eliminating the influence of the ISI. The 1-tap FEQ 460 equalizes the data carrier components and the decider 470 detects the original data from the equalized data.

The delay 480 delays the detected data by one frame period so that the delayed data can be used to estimate interference for the next frame. The $H_{ISI}$ filter 490 functions as an interference estimator for computing an interference estimate from the delayed data by a known interference extraction technique. The interference estimate is provided to the adders 450-1 to 450-M, to eliminate interference from the next frame.

If a CIR of length L is represented as $[c_0, c_1, ..., c_L]$, the filtering coefficient of the $H_{ISI}$ filter 490 for eliminating the ISI is determined by

$$H_{ISI} = S_I^T W_N C_{ISI} W_N^* (S_1 + S_0 P),$$

$$\mathbf{C_{ISI}} = \begin{bmatrix} \mathbf{0}_{(L-L_{cp})\times(N-L+L_{cp})} & \mathbf{C_t} \\ \mathbf{0}_{(N-L+L_{cp})\times(N-L+L_{cp})} & \mathbf{0}_{(N-L+L_{cp})\times(L-L_{cp})} \end{bmatrix},$$

$$\mathbf{C_t} = \begin{bmatrix} \mathbf{c_L} & \mathbf{c_{L-1}} & \cdots & \mathbf{c_{L_{cp}+1}} \\ \mathbf{0} & \mathbf{c_L} & \cdots & \mathbf{c_{L_{cp}+2}} \\ \cdots & \ddots & \ddots & \cdots \\ \mathbf{0} & \cdots & \mathbf{0} & \mathbf{c_L} \end{bmatrix}, \qquad \ldots\ldots (8)$$

where $(\cdot)^T$ is the transpose.

The receiver having the above-described configuration eliminates interference from the current frame using an ISI estimate detected from the previous frame, which obviates the need for redundancy in the frequency band. While the receivers 300 and 400 are illustrated with the redundant carrier sorters 330 and 440 in FIGs. 6 and 7, without redundant carriers, that is, if all carriers are assigned for data transmission, the redundant carrier sorters 330 and 440 are unnecessary.

The conventional FEQ-DMT requires (N-K)xK complex multiplications in a receiver to implement a Q filter. However, because a received signal contains values at decimal places to the right of the decimal point, the complex multiplications require complex hardware or software. However, the inventive transmitter 200 can be implemented more easily with shift registers by use of a P filter having an integer input. Similarly, the inventive receiver 400 can be implemented without multiplications because it estimates an interference using an integer input. Therefore, a more simplified configuration is possible for the receiver.

The performance of the transmission/reception technology according to the present invention will be compared below with the conventional technology, especially FEQ-DMT. The filtering coefficient of a Q filter used in the FEQ-DMT is expressed as

$$Q = -S_1^T W_N A_{red} (S_0^T W_N A_{red})^{-1} \qquad (9)$$

where $W_N$ is an N-point FFT matrix, $S_0$ is an NxK matrix that assigns $V_{1:K}$ to redundant carriers, and $S_1$ is an Nx(N-K) matrix that assigns $U_{1:N-K}$ to data carriers, as stated before. $A_{red}$ is an $(L-L_{cp})$xN matrix for extracting $1:L-L_{cp}$ data symbols, expressed as

$$A_{red} = [I_{(L-L_{cp})} 0_{(L-L_{cp})x(N-L+L_{cp})}] \qquad (10)$$

To verify the performance of the present invention, the performance of the FEQ-DMT system and the system performance according to the present invention were simulated under a static channel environment showing a fractional power distribution, as illustrated in FIG. 8. For the simulation, 128 carriers, a 5-MHz bandwidth, and AWGN (Additive White Gaussian Noise) having an SNR of 30dB were assumed. It was also assumed that the sum of transmission signal powers is constant and data carriers have uniform transmission power. The simulation result was represented in terms of an effective data rate under the condition of an error rate of $10^{-7}$ and a margin of 6dB. In the simulation, a CIR corresponding to two samples in length was compensated for by using carriers having too poor an SNR for bit loading together with a CP in the FEQ-DMT and the present invention.

FIG. 9 illustrates the results of the simulation. Reference numeral 10 denotes the transmission/reception structure using a CP according to the present invention, reference numeral 20 denotes an FEQ-DMT reception structure using the CP, and reference numeral 30 denotes a transmission/reception structure using the CP without additional component for interference elimination. It is noted from FIG. 9 that the FEQ-DMT using the CP and the present invention using the CP exhibit better performance than the use of only the CP. Accordingly, it is concluded that the transmission/reception scheme of the present invention minimizes performance degradation caused by a CIR that is longer than a CP.

As described above, the present invention reduces system complexity remarkably without deepening system deterioration caused by the use of redundant carriers when a CIR that is longer than a CP appears. The inventive transmission/reception scheme is easily implemented by integer input-based multiplications and prevents noise spread caused by the redundant carriers.

While the present invention has been shown and described with reference to certain preferred embodiments thereof, it will be understood by those skilled in the art that various changes in form and details may be made therein without departing from the scope of the invention as defined by the appended claims.

## Claims

**1.** A transmitting apparatus in an orthogonal frequency division multiplexing system in which N carriers having different frequency bands are used and K carriers of the N carriers are set as redundant carriers, comprising:

a P filter for receiving (N-K) data symbols and generating K virtual data symbols; and
an inverse fast Fourier transformer having N input taps corresponding to the N carriers, for receiving the (N-K) data symbols at (N-K) taps corresponding to data carriers other than the redundant carriers, receiving the K virtual data symbols at K taps corresponding to the redundant carriers, inverse-fast-Fourier-transforming the (N-K) data symbols and the K virtual data symbols, and outputting an data frame;

wherein the K virtual data symbols are set such that values causing interchannel interference in the data frame become zeroes.

**2.** The transmitting apparatus of claim 1, further comprising a cyclic prefix adder for copying a last sample of a predetermined length of the data frame and adding the copied last sample as a cyclic prefix before the data frame.

**3.** The transmitting apparatus of claim 2, wherein if the length of the cyclic prefix is $L_{cp}$, a maximum length of a channel impulse response is L, and L is greater than $L_{cp}$, the P filter determines the K virtual data symbols such that 1:L-$L_{cp}$ values in the cyclic prefix are zeroes.

**4.** The transmitting apparatus of one of claims 1 to 3, wherein a filtering coefficient P of the P filter is determined by

$$P = -(AW_N^* S_0)^{-1} AW_N^* S_1$$

$$A = [0_{(L-L_{cp})\times(N-L)} I_{(L-L_{cp})} 0_{(L-L_{cp})\times L_{cp}}]$$

where $W_N$ is an N-point fast Fourier transformer matrix, $S_0$ is an NxK matrix that assigns the K virtual data symbols to the redundant carriers, $S_1$ is an Nx(N-K) matrix that assigns the (N-K) data symbols to the data carriers, 0 is a zero matrix, and I is an identity matrix.

**5.** The transmitting apparatus of one of claims 1 to 4, wherein the redundant carriers have a relatively bad signal to noise ratio compared to the other carriers.

**6.** A transmitting method in an orthogonal frequency division multiplexing system in which N carriers having different frequency bands are used and K carriers of the N carriers are set as redundant carriers, comprising the steps of:

receiving (N-K) data symbols in a P filter and generating K virtual data symbols; and
inverse-fast-Fourier-transforming the (N-K) data symbols to be assigned to data carriers other than the redundant carriers, and the K virtual data symbols to be assigned to the redundant carriers and outputting an inverse fast Fourier transformer data frame;

wherein the K virtual data symbols are set such that values causing interchannel interference in the data frame become zeroes.

**7.** The transmitting method of claim 6, further comprising the step of copying a last sample of a predetermined length of the data frame and adding the copied last sample as a cyclic prefix before the data frame.

**8.** The transmitting method of claim 7, wherein if the length of the cyclic prefix is $L_{cp}$, a maximum length of a channel impulse response is L, and L is greater than $L_{cp}$, the K virtual data symbols are determined such that 1:L- $L_{cp}$ values in the cyclic prefix are zeroes.

**9.** The transmitting method of one of claims 6 to 8, wherein a filtering coefficient P of the P filter is determined by

$$P = -(AW_N^* S_0)^{-1} AW_N^* S_1$$

$$A = [0_{(L-L_{cp}) \times (N-L)} I_{(L-L_{cp})} 0_{(L-L_{cp}) \times L_{cp}}]$$

where $W_N$ is an N-point fast Fourier transformer matrix, $S_0$ is an NxK matrix that assigns the K virtual data symbols to the redundant carriers, $S_1$ is an Nx(N-K) matrix that assigns the (N-K) data symbols to the data carriers, 0 is a zero matrix, and I is an identity matrix.

**10.** A receiving apparatus in an orthogonal frequency division multiplexing system using N carriers having different frequency bands, comprising:

a cyclic prefix remover for receiving a data frame and removing a cyclic prefix of a predetermined length from before the data frame;
a fast Fourier transformer for fast-Fourier-transforming an output of the cyclic prefix remover and outputting N frequency components corresponding to the N carriers;
a plurality of adders for subtracting an interference estimated from a previous data frame from the N frequency components;
a 1-tap frequency equalizer for equalizing data output from the adders;
a decider for detecting original data symbols from the equalized data; and
an interference estimator for estimating an interference from the detected original data symbols and providing the interference estimate to the adders for a next data frame period.

**11.** The receiving apparatus of claim 10, wherein if a channel impulse response is longer than the cyclic prefix, the interference estimator calculates an interference estimate representing inter-symbol interference caused by a last part of the previous data frame.

**12.** A receiving method in an orthogonal frequency division multiplexing system using N carriers having different frequency bands, comprising the steps of:

receiving a data frame and removing a cyclic prefix of a predetermined length from before the data frame;
fast-Fourier-transforming the data frame free of the cyclic prefix and outputting N frequency components corresponding to the N carriers;
eliminating an interference estimated from a previous data frame from the N frequency components;
equalizing the frequency components free of the interference estimate;
detecting original data symbols from the equalized data; and
estimating an interference from the detected data symbols to be used for a next data frame period.

**13.** The receiving method of claim 12, wherein if a channel impulse response is longer than the cyclic prefix, the interference estimate represents inter-symbol interference caused by a last part of the previous data frame.

**14.** A receiving apparatus in an orthogonal frequency division multiplexing system in which N carriers having different frequency bands are used and K carriers of the N carriers are set as redundant carriers, comprising:

a cyclic prefix remover for removing a cyclic prefix from before a received data frame;
a fast Fourier transformer for fast-Fourier-transforming an output of the cyclic prefix remover and outputting N frequency components corresponding to the N carriers;
a redundant carrier sorter for separating the N frequency components into K redundant components corresponding to the redundant carriers and other data components corresponding data carriers other than the K redundant carriers;
a plurality of adders for subtracting an interference estimated from a previous data frame from the other data components;
a 1-tap frequency equalizer for equalizing outputs of the adders;
a decider for detecting original data symbols from the equalized data; and
an interference estimator for estimating an interference from the detected original data symbols and providing the interference estimate to the adders for a next data frame period.

**15.** The receiving apparatus of claim 14, wherein if a channel impulse response is longer than the cyclic prefix, the interference estimator calculates an interference estimate representing inter-symbol interference caused by a last part of the previous data frame.

**16.** The receiving apparatus of claim 14 or 15, wherein the K redundant carriers have a relatively bad signal to noise ratio compared to the other carriers.

**17.** A receiving method in an orthogonal frequency division multiplexing system in which N carriers having different frequency bands are used and K carriers of the N carriers are set as redundant carriers, comprising the steps of:

removing a cyclic prefix from before a received data frame;
fast-Fourier-transforming the data frame free of the cyclic prefix and outputting N frequency components corresponding to the N carriers;
separating the N frequency components into K redundant components corresponding to the redundant carriers and other data components corresponding data carriers other than the redundant carriers;
eliminating an interference estimated from a previous data frame from the other data components;
equalizing the other data components free of the interference estimate;
detecting original data symbols from the equalized data; and
estimating an interference from the detected original data symbols to be used for a next data frame period.

**18.** The receiving method of claim 17, wherein if a channel impulse response is longer than the cyclic prefix, the interference estimate represents inter-symbol interference caused by a last part of the previous data frame.

**19.** The receiving method of claim 17 or 18, wherein the K redundant carriers have a relatively bad signal to noise ratio compared to the other carriers.

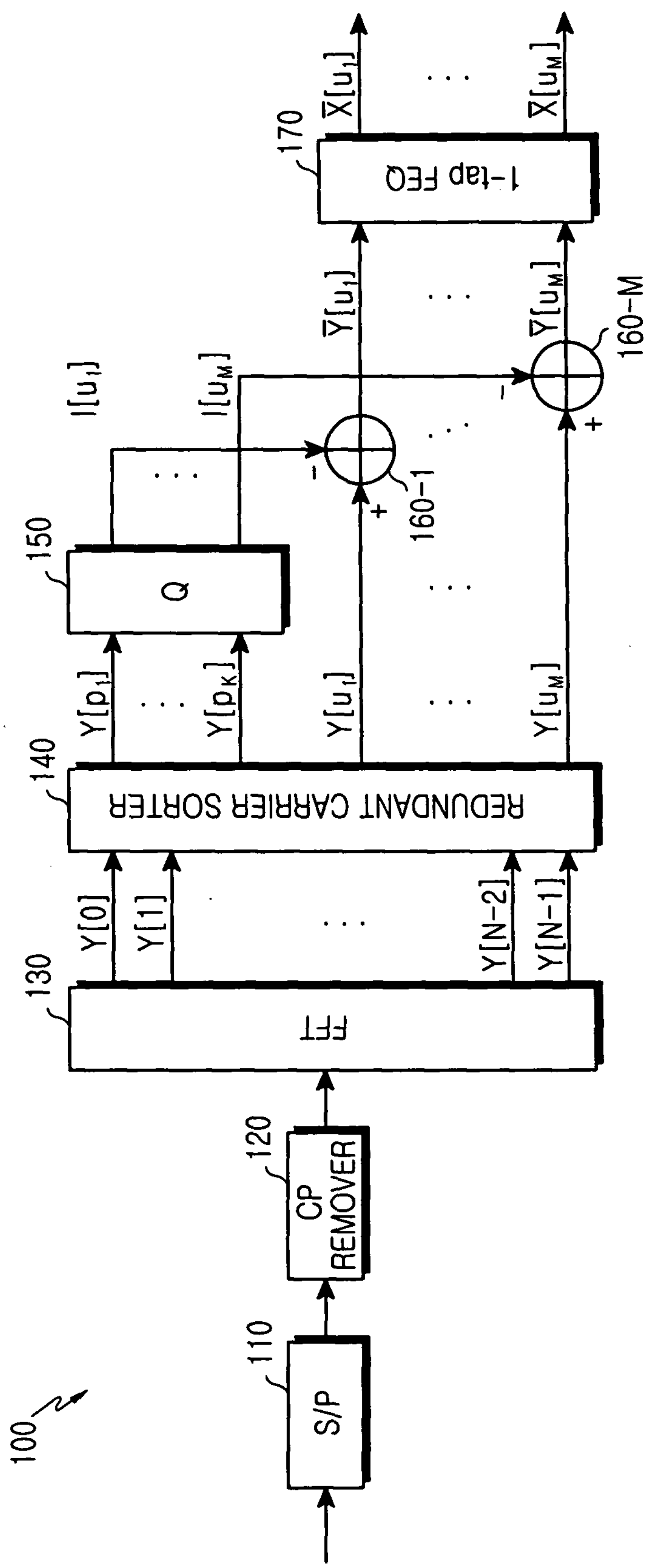
100
110
S/P
120
CP REMOVER
130
FFT
Y[0]
Y[1]
Y[N-2]
Y[N-1]
140
REDUNDANT CARRIER SORTER
Y[p1]
Y[pK]
Y[u1]
Y[uM]
150
Q
I[u1]
I[uM]
160-1
160-M
Ȳ[u1]
Ȳ[uM]
170
1-tap FEQ
X̄[u1]
X̄[uM]

FIG. 1

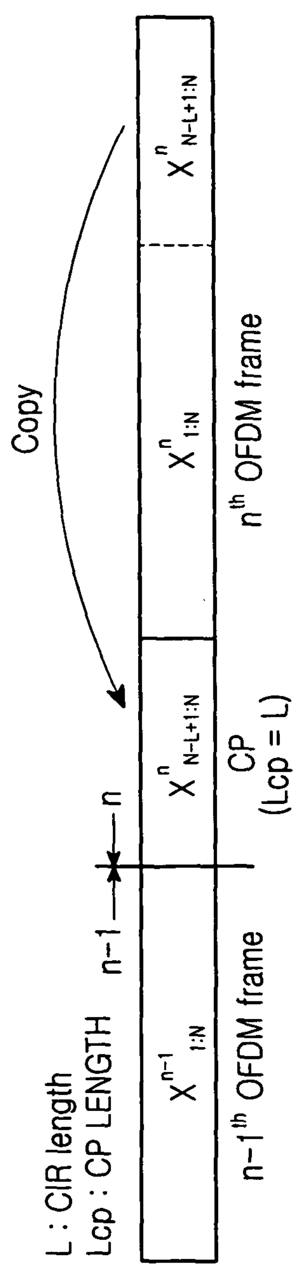
L : CIR length
Lcp : CP LENGTH
n−1
n
Copy
$X^{n-1}_{1:N}$
$X^{n}_{N-L+1:N}$
$X^{n}_{1:N}$
$X^{n}_{N-L+1:N}$
n−1th OFDM frame
CP
(Lcp = L)
nth OFDM frame

FIG.2A

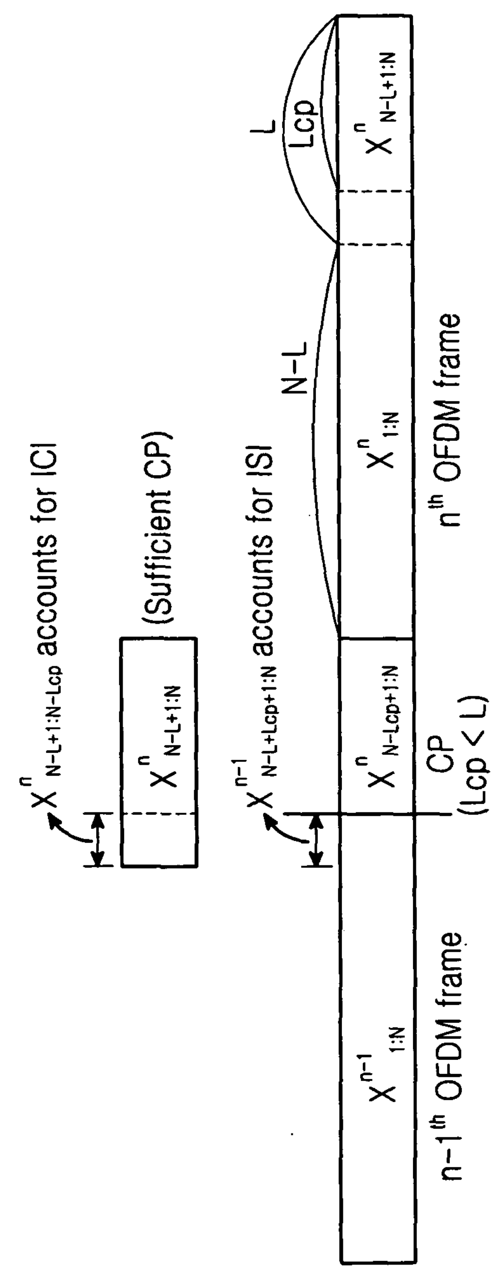
$X^{n}_{N-L+1:N-Lcp}$ accounts for ICI
$X^{n}_{N-L+1:N}$
(Sufficient CP)
$X^{n-1}_{N-L+Lcp+1:N}$ accounts for ISI
N−L
L
Lcp
$X^{n-1}_{1:N}$
$X^{n}_{N-Lcp+1:N}$
$X^{n}_{1:N}$
$X^{n}_{N-L+1:N}$
n−1th OFDM frame
CP
(Lcp < L)
nth OFDM frame

FIG.2B

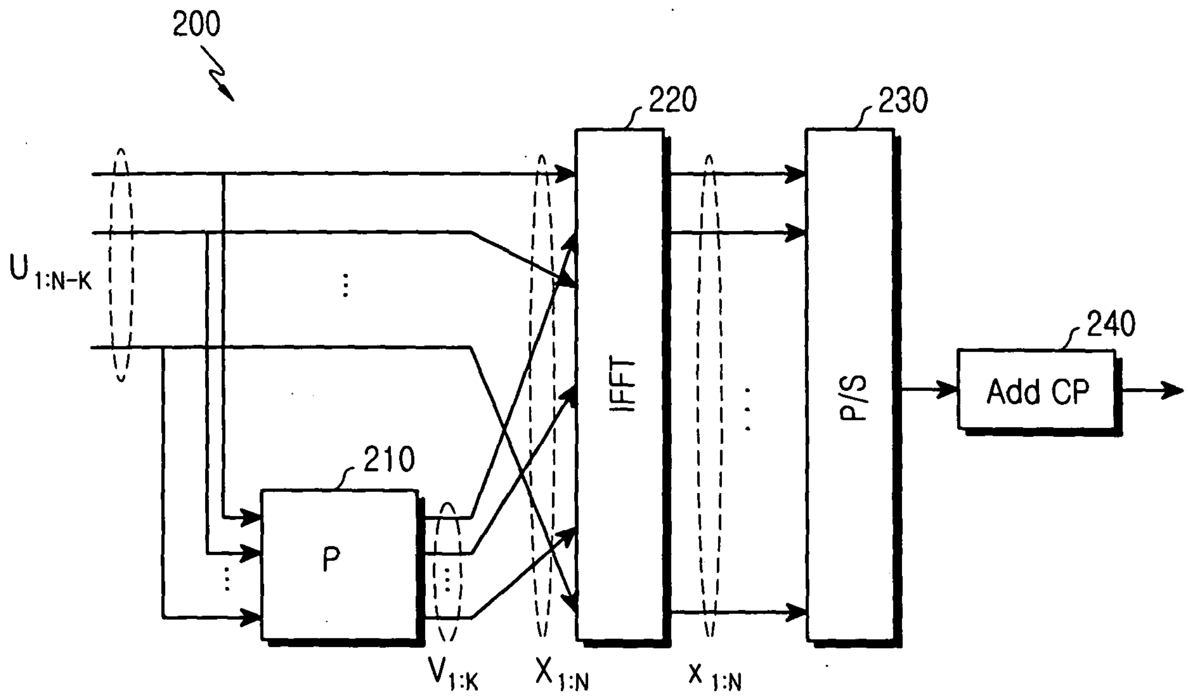


FIG.3

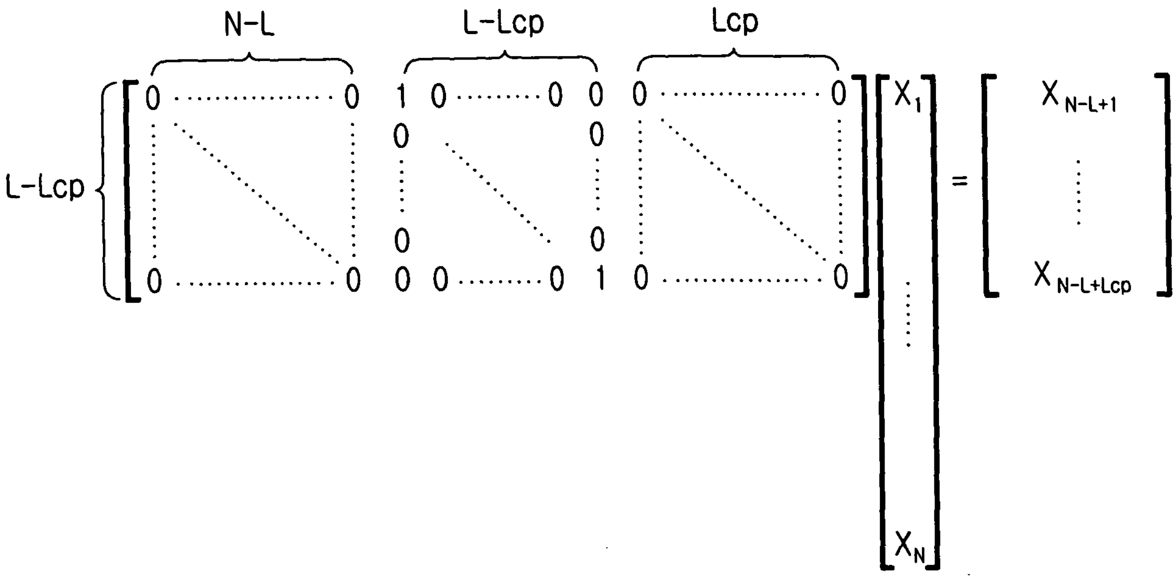


FIG.4

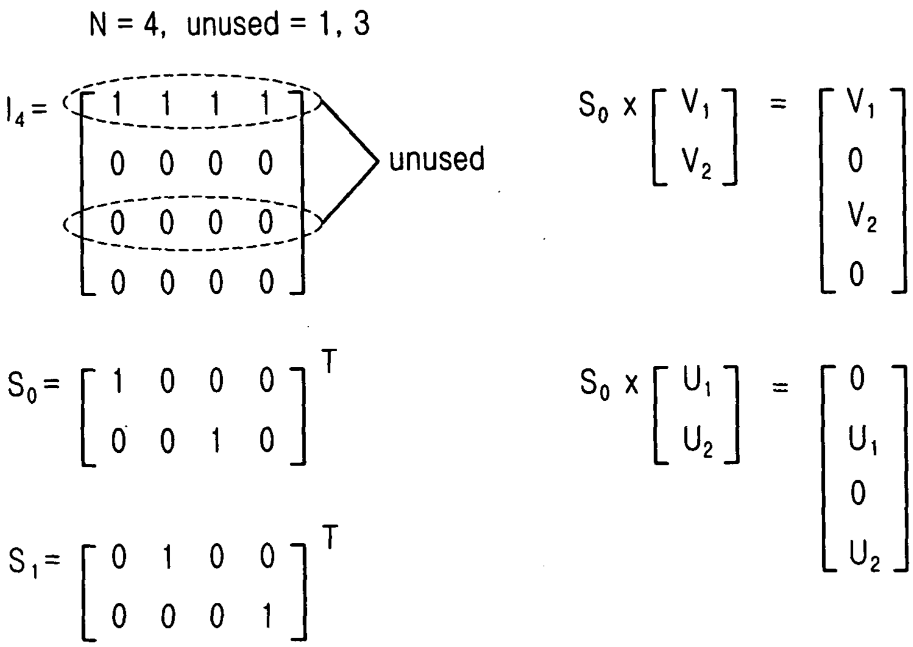


FIG.5

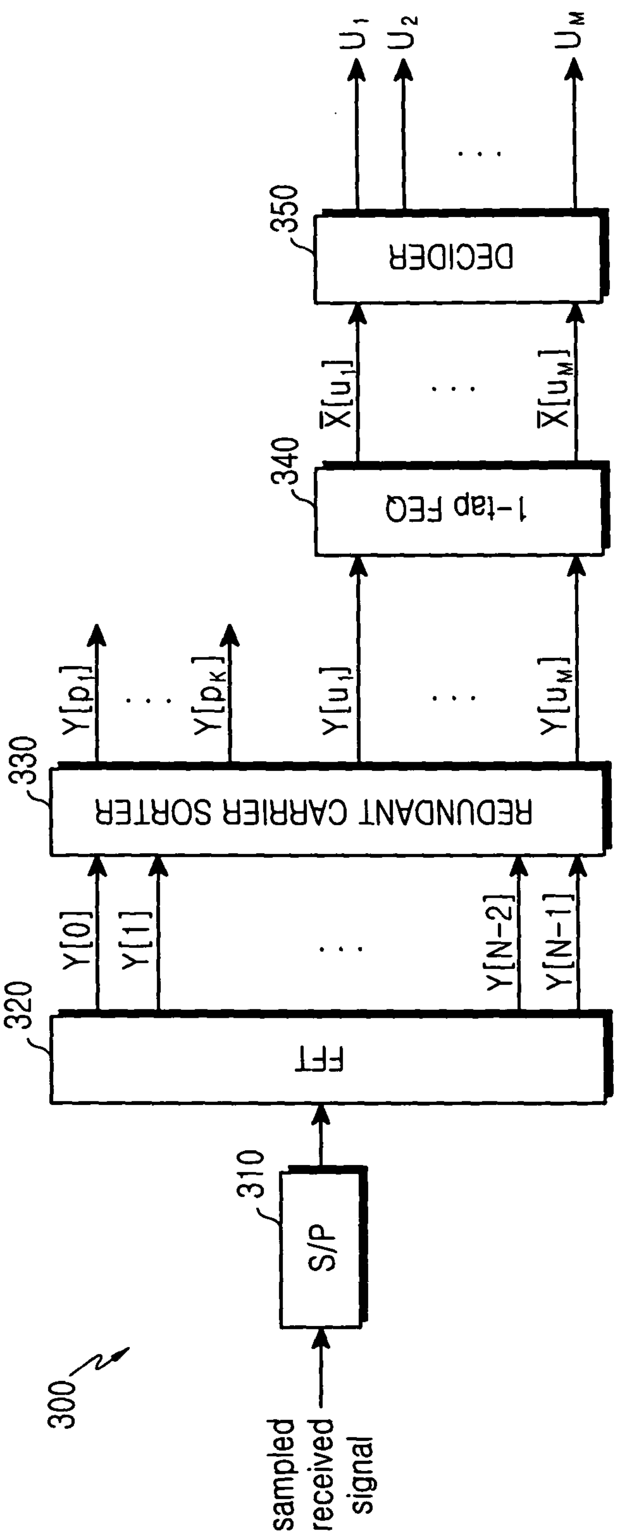
300
sampled received signal
310
S/P
320
FFT
Y[0]
Y[1]
Y[N-2]
Y[N-1]
330
REDUNDANT CARRIER SORTER
Y[p1]
Y[pK]
Y[u1]
Y[uM]
340
1-tap FEQ
X̄[u1]
X̄[uM]
350
DECIDER
U1
U2
UM

FIG.6

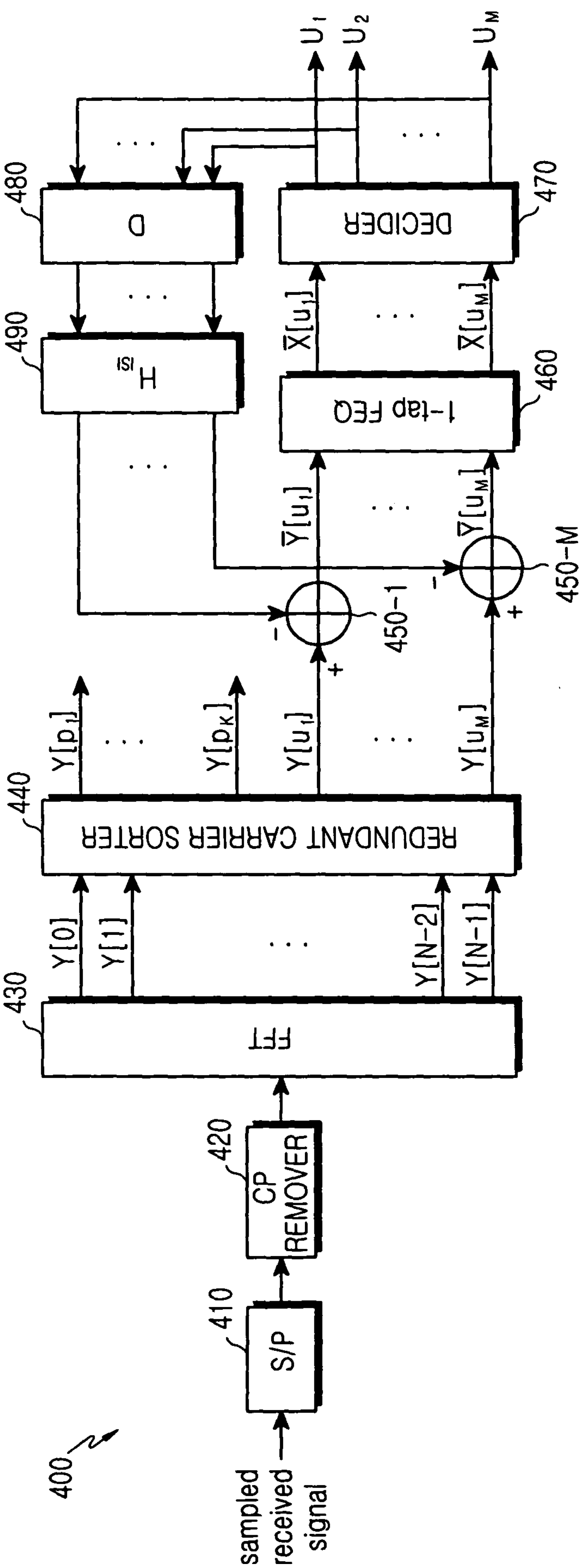
400
sampled received signal
S/P
410
CP REMOVER
420
FFT
430
Y[0]
Y[1]
Y[N-2]
Y[N-1]
REDUNDANT CARRIER SORTER
440
Y[p1]
Y[pK]
Y[u1]
Y[uM]
+
−
450-1
450-M
Ȳ[u1]
Ȳ[uM]
1-tap FEQ
460
X̄[u1]
X̄[uM]
DECIDER
470
D
480
H ISI
490
U1
U2
UM

FIG.7

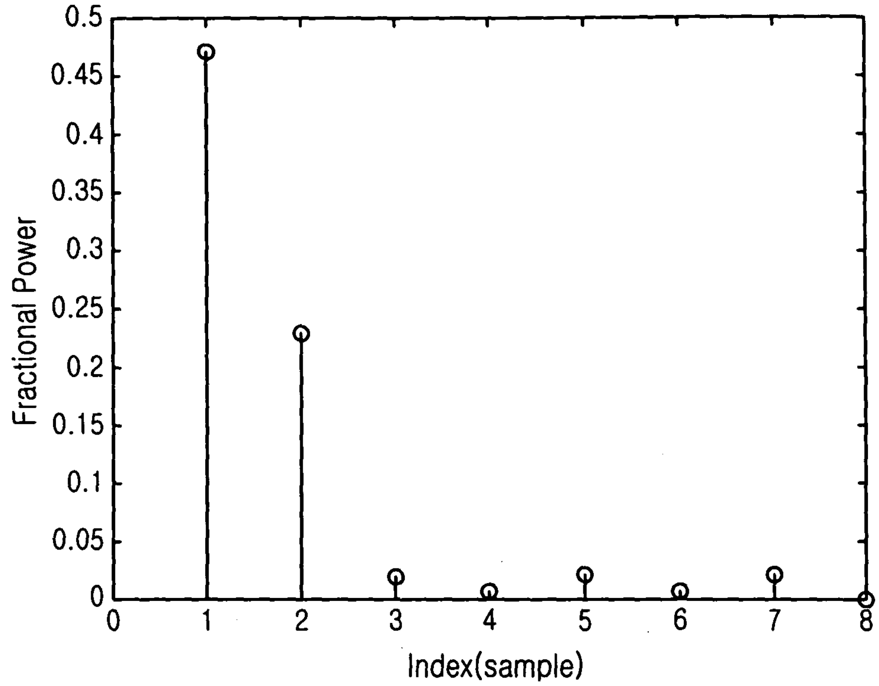
0.5
0.45
0.4
0.35
0.3
0.25
0.2
0.15
0.1
0.05
0
Fractional Power
0
1
2
3
4
5
6
7
8
Index(sample)

FIG.8

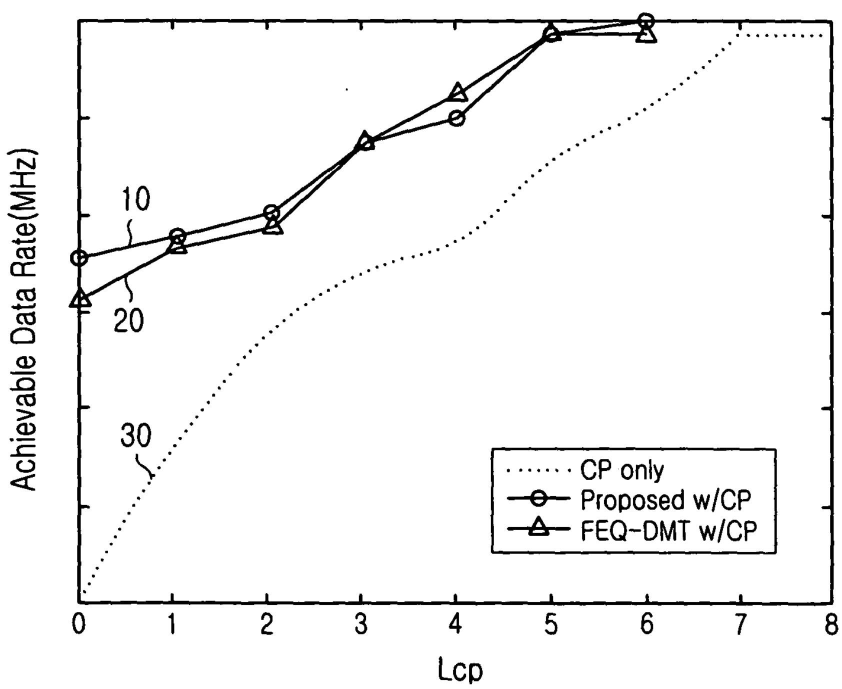
Achievable Data Rate(MHz)
10
20
30
CP only
Proposed w/CP
FEQ-DMT w/CP
0
1
2
3
4
5
6
7
8
Lcp

FIG.9

European Patent Office

# EUROPEAN SEARCH REPORT

Application Number
EP 04 01 4868

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2001/005395 A1 (JIN GARY QU) 28 June 2001 (2001-06-28) * abstract * * paragraph [0003] * * paragraph [0010] * * paragraph [0028] * * paragraph [0030] * * paragraph [0036] * ----- | 1-19 | H04L27/26 |
| A | KELLER T ET AL: "SUB-BAND ADAPTIVE PRE-EQUALISED OFDM TRANSMISSION" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY : IEEE, US, vol. VOL. 1 CONF. 50, September 1999 (1999-09), pages 334-338, XP000929066 ISBN: 0-7803-5436-2 * the whole document * ----- | 1-19 | |
| | | | TECHNICAL FIELDS SEARCHED (Int.Cl.7) |
| | | | H04L |

The present search report has been drawn up for all claims

| Place of search | Date of completion of the search | Examiner |
|---|---|---|
| The Hague | 2 November 2004 | Reilly, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 01 4868

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2004

| Patent document cited in search report | Publication date | Patent family member(s) | Publication date |
|---|---|---|---|
| US 2001005395 A1 | 28-06-2001 | GB 2357937 A | 04-07-2001 |
| | | WO 0148939 A2 | 05-07-2001 |
| | | CN 1413404 T | 23-04-2003 |
| | | EP 1240761 A2 | 18-09-2002 |

EPO FORM P0459

For more details about this annex : see Official Journal of the European Patent Office, No. 12/82